# FASCICULE DE BREVET EUROPEEN

(11) **EP 3 881 515 B1**
(45) Date de publication et mention de la délivrance du brevet: **16.08.2023**
(21) Numéro de dépôt: 19848788.6
(22) Date de dépôt: 19.12.2019
(51) Int. Cl.: H04L 69/00, H04L 41/14, H04L 41/5009

(54) **SYSTÈME DE SUPERVISION FORMELLE DE COMMUNICATIONS**
SYSTEM ZUR FORMELLESUBERWACHUNG VON KOMMUNIKATIONEN
SYSTEM FOR THE FORMAL SUPERVISION OF COMMUNICATIONS

(30) Priorité: 20.12.2018 FR 1873585
(43) Date de publication de la demande: 22.09.2021
(73) Titulaire: Commissariat à l'Energie Atomique et aux Energies Alternatives, 75015 Paris (FR)
(72) Inventeur: DUBRULLE, Paul, 75014 PARIS (FR)
(74) Mandataire: Brevalex
(86) Numéro de dépôt international: PCT/FR2019/053201
(87) Numéro de publication internationale: WO 2020/128363

(56) Documents cités:
- US-A1- 2015 199 249
- US-A1- 2017 039 039

## Description

La présente invention concerne un système de supervision formelle de communications d'un ensemble d'applications concrètes, et plus particulièrement dans une architecture orientée-service.

### État de la technique antérieure

La présente invention s'applique à des systèmes dans lesquels des applications concrètes utilisent des fonctions d'interface prédéfinies pour s'échanger des données entre elles. En particulier, l'invention s'applique à de tels systèmes dans lesquels le respect du comportement attendu de certaines tâches est considéré comme *critique,* à savoir qu'en cas de non-respect, il peut y avoir des conséquences très négatives. D'une manière générale, l'invention s'applique à des systèmes dans lesquels cohabitent des tâches de niveaux de criticité différents, certaines tâches étant considérées comme devant respecter strictement le comportement attendu, d'autres pour lesquels des écarts de comportement sont acceptables temporairement, ou d'autres encore sans garantie sur le comportement. On parle alors de systèmes à criticité mixte.

Les récents systèmes embarqués temps-réels pour les véhicules autonomes sont un exemple de tels systèmes. Les nouvelles architectures embarquées pour les véhicules sont distribuées et hétérogènes, et le paradigme utilisé pour les programmer est orienté-service. Dévier du comportement attendu pour une tâche critique pourrait causer un dysfonctionnement qui peut être assez hasardeux. En revanche, certaines tâches liées au confort ou à l'expérience de conduite n'ont pas vraiment de contraintes sur leur comportement, il s'agit donc de systèmes à criticité mixte.

Il est ainsi important d'avoir un outil qui permet de réaliser une spécification formelle d'un tel système, et de faire une vérification formelle de la conformité d'une implémentation du système spécifié.

Toutefois, la spécification de ces systèmes, prenant en compte toutes les contraintes, est un problème technique très complexe. Vient ensuite le travail d'allocation des ressources pour une implémentation du système spécifié, et la vérification que ces ressources sont suffisantes pour que l'implémentation fonctionne en accord avec sa spécification.

Il existe des algorithmes basés sur des modèles formels pour spécifier des systèmes flot de données temps-réel reconfigurables. Une telle méthode est par exemple décrite dans le document [1]. Cette méthode permet de vérifier les ressources nécessaires à l'implémentation ainsi que l'absence d'inter-blocage entre les acteurs. Toutefois, elle ne permet pas de vérifier pendant son exécution la conformité du comportement d'une implémentation du système spécifié vis-à-vis de sa spécification.

Un autre problème est l'implémentation d'un système spécifié dans la méthodologie formelle. Il s'agit de développer un logiciel implémentant l'application concrète modélisée par chaque acteur, et d'utiliser dans ces logiciels les interfaces de communication pour réaliser les communications spécifiées formellement. Cette implémentation requiert de configurer les éléments logiciels mis en oeuvre pour la communication entre les interfaces de manière à ce que ces communications soient conformes à la spécification formelle.

Il existe de nombreux langages et interfaces de programmation pour écrire des logiciels pour ce genre de systèmes et en particulier pour des systèmes orientés-services. Toutefois, tous se basent sur des concepts similaires à savoir la publication de données par un serveur et la souscription à ces données par un ou plusieurs clients, ou l'émission de requêtes par un ou plusieurs clients à destination d'un serveur en charge d'effectuer le traitement requis. Les connexions entre clients et serveurs peuvent changer au cours de la vie du système, et des contraintes de temps sont parfois imposées pour assurer le bon fonctionnement du système.

Les documents [2, 3] décrivent des langages qui permettent d'écrire des logiciels implémentant des acteurs flot de données, et des compilateurs associés qui génèrent du code de manière à réaliser le comportement du système spécifié.

Toutefois, ces logiciels sont limités dans le contexte considéré parce qu'ils ne permettent pas d'exprimer toutes les contraintes d'une spécification formelle et que pour la plupart, les architectures logicielles ciblées ne sont pas adaptées pour des systèmes à criticité mixte. De plus, dans le cadre d'un modèle de développement où divers producteurs de logiciel implémentent des spécifications d'acteurs, pour les fournir à un même intégrateur, il est extrêmement difficile pour l'intégrateur d'imposer l'utilisation d'un langage spécifique.

Le document US 2015/199249 décrit système de tests logiciels d'architectures orientées services, avec plusieurs composants indépendants.

Le document US 2017/039039 décrit un système de génération automatique de cas de test à partir des exigences de logiciel en langage naturel..

L'objet de la présente invention est par conséquent de proposer un système de supervision formelle de communications d'un ensemble d'applications remédiant aux inconvénients précités, en particulier en permettant d'intégrer des implémentations logicielles écrites dans un langage quelconque sur une plateforme distribuée hétérogène.

### Présentation de l'invention

La présente invention concerne un système de supervision formelle de communications d'un ensemble d'applications concrètes d'une plateforme, comportant :
- un module d'acquisition configuré pour acquérir un modèle formel d'un flot de données comportant un ensemble d'acteurs s'échangeant entre eux des informations quantifiables à travers des canaux de communication unidirectionnels, ledit modèle formel décrivant le comportement dudit ensemble d'acteurs modélisant ledit ensemble d'applications concrètes, et une spécification de communication décrivant des implémentations logicielles implémentant les applications modélisées par lesdits acteurs, lesdites implémentations logicielles étant configurées pour faire des appels à des fonctions de communication prédéterminées relatives à l'interface de programmation de ladite plateforme, et
- un module de supervision configuré pour vérifier qu'une séquence d'appel auxdites fonctions de communication est conforme au comportement attendu dudit ensemble d'acteurs.

Ainsi, le module de supervision peut avoir connaissance de tous les comportements possibles et attendus (et non seulement un scénario prédéterminé parmi les nombreux possibles) et permet d'appliquer des actions correctives en cas de détection de comportement aberrant. En outre, ce système permet d'intégrer des implémentations logicielles écrites dans un langage quelconque sur une plateforme distribuée hétérogène présentant un comportement de communication conforme à celui spécifié dans le modèle formel, sans besoin de modifier les logiciels implémentant les acteurs. Les implémentations logicielles peuvent être embarquées en ligne dans un environnement opérationnel.

Selon un mode de réalisation préféré de la présente invention, le module de supervision est configuré pour construire un automate pour chaque implémentation logicielle correspondant à un acteur, chaque automate comportant un ensemble d'états dont la transition d'un état à un autre est déclenchée par un appel de l'implémentation logicielle d'une fonction parmi lesdites fonctions de communication, ledit automate se basant sur le comportement attendu par le modèle formel pour tracer les séquences d'appel valides auxdites fonctions de communication de l'implémentation logicielle.

Avantageusement, chaque automate comporte une première partie associée à l'initialisation de l'implémentation logicielle et une seconde partie associée au fonctionnement de l'implémentation logicielle, la transition d'un état final de ladite première partie à un état initial de ladite seconde partie est déclenchée lorsqu'un signal de synchronisation est reçu par l'implémentation logicielle, indiquant l'exécution d'une application concrète sur la plateforme.

Avantageusement, le module de supervision est configuré pour générer des éléments logiciels configurés pour capturer les appels de fonctions de communication et pour s'assurer que la séquence des appels effectués à l'exécution d'une application concrète correspond à la séquence définie par l'automate.

Avantageusement, les éléments logiciels comportent une fonction étendue pour chacune des fonctions de communication, une fonction de gestion d'échéance de données d'entrée, et une fonction de gestion d'une activation courante.

Avantageusement, la spécification de communication est une spécification d'une implémentation orientée-service.

Avantageusement, les fonctions de communication sont orientées-service et comportent une fonction d'offre de service, une fonction de publication d'interface, une fonction de souscription à une interface publiée, une fonction d'émission, une fonction de réception, une fonction de requête, et une fonction de traitement sur une interface.

Avantageusement, le modèle formel comporte un ensemble de données de configuration requises pour l'implémentation desdits acteurs permettant ainsi de décrire le comportement attendu d'un système embarqué.

Avantageusement, les données de configuration comportent pour chacun des acteurs : des données de budget, de délai initial, d'échéance initiale, d'échéance d'entrées, de politique d'entrées par défaut, d'indicateur persistant/éphémère, et d'indicateur strict/relâché.

Avantageusement, la spécification de communication comporte des liens entre les implémentations logicielles et les acteurs du modèle formel.

L'invention vise également un équipement embarqué temps-réel, conçu en utilisant le système de supervision selon l'une quelconque des caractéristiques précédentes, ledit équipement embarqué étant configuré pour recevoir des mesures spécifiques à son environnement et pour délivrer des résultats actionnant des opérations de fonctionnement.

Avantageusement, ledit équipement est un véhicule autonome ou non autonome de type terrestre, ferroviaire, aérospatial ou naval.

L'invention vise aussi un procédé de supervision formelle de communications d'un ensemble d'applications concrètes, comportant les étapes suivantes :
- acquérir un modèle formel d'un flot de données comportant un ensemble d'acteurs s'échangeant entre eux des informations quantifiables à travers des canaux de communication unidirectionnels, ledit modèle formel décrivant le comportement d'un ensemble d'acteurs modélisant ledit ensemble d'applications concrètes, et une spécification de communication décrivant des implémentations logicielles implémentant les applications modélisées par lesdits acteurs, lesdites implémentations logicielles étant configurées pour faire des appels à des fonctions de communication prédéterminées relatives à l'interface de programmation de ladite plateforme, et
- vérifier qu'une séquence d'appel auxdites fonctions de communication est conforme au comportement attendu dudit ensemble d'acteurs.

### Brève description des figures

D'autres particularités et avantages du dispositif et du procédé selon l'invention ressortiront mieux à la lecture de la description faite ci-après, à titre indicatif mais non limitatif, en référence aux dessins annexés sur lesquels :
La Fig. 1 illustre de manière schématique un système de supervision formelle de communications d'un ensemble d'applications concrètes d'une plateforme, selon un mode de réalisation de l'invention ;
La Fig. 2 illustre de manière schématique un exemple d'un modèle formel défini par un graphe selon un mode de réalisation de l'invention ;
Les Figs. 3A-3C illustrent de manière schématique la correspondance entre des acteurs du modèle formel et la description des interfaces orientées-service de la spécification de communication, selon un mode de réalisation de l'invention ; et
Les Figs. 4A et 4B illustrent de manière schématique la construction d'un automate, selon un mode de réalisation de l'invention.

### Description détaillée de l'invention

Le principe de la présente invention est de superviser les échanges de données entre des tâches de calcul implémentant des composants spécifiés dans une méthodologie formelle dans le but d'observer des échanges de données conformes à la spécification formelle.

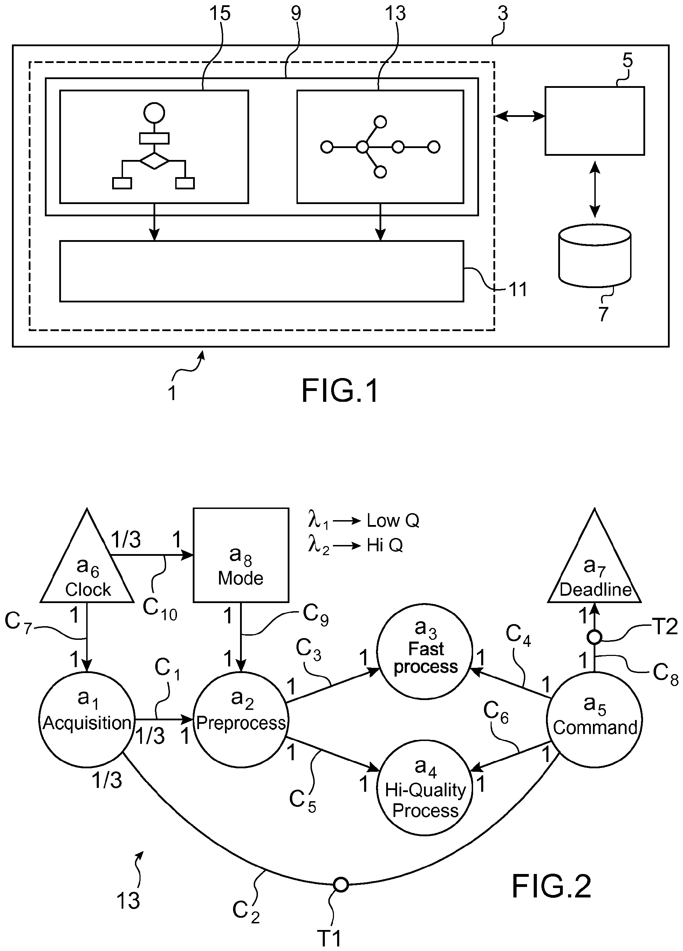

La Fig. 1 illustre de manière schématique un système de supervision formelle de communications d'un ensemble d'applications concrètes d'une plateforme, selon un mode de réalisation de l'invention.

Le système de supervision formelle 1 est mis en oeuvre par des moyens matériels comportant une machine de traitement de l'information tel un calculateur ou ordinateur 3 comportant un microprocesseur 5 et des mémoires 7. Le microprocesseur 5 est configuré pour exécuter un ou plusieurs programmes d'ordinateur comprenant des instructions de code de programme, stockés dans les mémoires 7 de l'ordinateur et conçus pour mettre en oeuvre le système de supervision formelle de communications d'un ensemble d'applications.

Le système de supervision vise à réaliser une supervision formelle de communications d'un ensemble d'applications concrètes d'une plateforme. Conformément à l'invention, le système de supervision comporte un module d'acquisition 9 et un module de supervision 11.

Le module d'acquisition est configuré pour acquérir un modèle formel 13 d'un flot de données décrivant le comportement d'un ensemble d'acteurs modélisant l'ensemble d'applications concrètes. En outre, le module d'acquisition 9 est configuré pour acquérir une spécification de communication 15 décrivant des implémentations logicielles implémentant les applications modélisées par les acteurs. Les implémentations logicielles sont configurées pour faire des appels à des fonctions de communication prédéterminées.

Le module de supervision 11 est configuré pour vérifier qu'une séquence d'appel aux fonctions de communication est conforme au comportement attendu de l'ensemble d'acteurs.

Le modèle formel 13 d'un flot de données comporte des acteurs indépendants s'échangeant entre eux des informations quantifiables, à travers des canaux de communication unidirectionnels. Les acteurs peuvent être des entités logicielles (par exemple, des applications) et/ou matérielles (par exemple, des capteurs, caméras, sondes, microprocesseurs, etc.). Chaque acteur est configuré pour attendre d'avoir reçu une quantité de données spécifiée statiquement sur ses canaux d'entrée dans le but de consommer cette quantité de données, d'effectuer (ou pas) un traitement de ces données, et de produire une quantité de données spécifiée statiquement sur ses canaux de sortie à destination de nouveaux acteurs, et chacun répétant ce comportement indéfiniment. Le processus de consommation/traitement/émission est communément appelé une activation.

Chaque activation se déroule selon des reconfigurations prédéfinies, et pour une reconfiguration donnée, l'activation va soit consommer/traiter/produire (on dit alors s'exécuter), soit ne rien faire (on dit alors passer), et le choix de changer de configuration est imprédictible.

Chaque acteur s'active selon les reconfigurations prédéfinies dans des fenêtres temporelles (dites temps-réel) avec éventuellement des contraintes de fréquence (ou de manière équivalente avec des contraintes de période).

Par ailleurs, la spécification de communication 15 comporte des informations sur les applications, les services qu'elle offrent, les services qu'elles utilisent, le type de données qui vont transiter sur les canaux, des informations sur les interactions entre les différentes applications, le lien ou la correspondance entre les applications de la plateforme et les acteurs du modèle formel, etc.

Le module de supervision 11 est un outil de génération de code qui prend en entrée la configuration provenant de la méthodologie formelle (i.e. modèle formel 13) et la description des applications de la spécification de communication 15, et génère automatiquement une couche logicielle de supervision en charge d'observer les communications réalisées par les implémentations des acteurs, et de corriger éventuellement les écarts vis-à-vis de la spécification formelle.

Le système de supervision 11 selon l'invention donne ainsi les moyens d'intégrer automatiquement des implémentations d'acteurs, écrites dans un langage quelconque et existant, sur une plateforme distribuée hétérogène.

Les potentielles applications de ce système de supervision sont nombreuses, étant donné que les architectures ciblées sont utilisées dans de nombreux domaines tel que l'Internet, l'automobile, l'aviation, la météorologie, etc.

En particulier, l'invention s'applique à une plateforme distribuée hétérogène pour un système ou dispositif embarqué où le respect du comportement attendu est considéré comme très important pour la sécurité et le bon fonctionnement de l'équipement pourvu d'un tel système.

Les récents systèmes embarqués temps-réels pour les véhicules autonomes sont un exemple de tels systèmes où des entités offrent des interfaces génériques pour permettre à des applications concrètes de s'échanger des données entre elles, chaque application étant indépendante et s'exécutant sur un calculateur d'une architecture distribuée. Les connexions entre applications peuvent être reconfigurées en fonction du mode de fonctionnement courant du véhicule, et/ou de la disponibilité des services.

Dans la suite, l'invention sera décrite en détail en faisant référence à un système modélisé par un modèle formel composé d'un ensemble d'acteurs et en donnant une description du comportement attendu par le modèle.

En effet, la Fig. 2 illustre de manière schématique un exemple d'un modèle formel défini par un graphe selon un mode de réalisation de l'invention.

Selon cet exemple, le modèle formel 13 comporte un acteur « Acquisition » faisant l'acquisition de données fournies par un capteur à 30Hz et un acteur « Command » envoyant une commande à un actuateur à 10Hz. La commande est déterminée selon le résultat d'une chaîne de traitement reconfigurable constituée d'un acteur « Preprocess » effectuant un prétraitement de la donnée dans toutes les reconfigurations possibles, et dans une reconfiguration, d'un acteur « Fast Process » effectuant un traitement rapide et basse définition de la donnée prétraitée, et dans l'autre reconfiguration d'un acteur « Hi-Quality Process » effectuant un traitement lent et haute définition. Le choix de la reconfiguration courante est effectué par un acteur « Mode » qui utilise de préférence le traitement haute-définition lorsqu'il est disponible.

Le graphe modélise un flot de données avec des contraintes de fréquence, différents modes de reconfigurations et des données initiales disponibles pour une consommation initiale. Les cercles a₁-a₅ représentent des acteurs dits génériques qui effectuent des traitements sur les données. Ces acteurs génériques a₁-a₅ sont ainsi adaptés pour consommer des données, faire des calculs pour transformer les données et produire des résultats. Les triangles a₆ et a₇ représentent des acteurs dits horloge « Clock» a₆ ou échéance « Deadline » a₇ qui produisent et consomment des données avec des contraintes de fréquence. Le carré a₈ représente un acteur dit « Mode » a₈ en charge de signaler des reconfigurations. Les arcs dirigés c₁-c₁₀ sont des canaux unidirectionnels indiquant chacun un flot de données entre deux acteurs et les valeurs numériques associées donnant la quantité de données produite ou consommée sur le canal.

Selon cet exemple, le système modélisé est composé de cinq acteurs génériques a₁-a₅ (Acquisition a₁, Preprocess a₂, Fast Process a₃, Hi-Quality Process a₄ et Command a₅) deux acteurs temporels a₆ et a₇ (Clock et Deadline) et d'un acteur de Mode a₈. L'acteur « Acquisition » a₁ (acteur d'acquisition) fait l'acquisition de données fournies par l'acteur horloge a₆ à 30Hz. L'acteur Command a₅ (acteur de commande) envoie une commande à l'acteur actuateur « Deadline » a₇à 10Hz. La commande est déterminée selon le résultat d'une chaîne de traitement reconfigurable constituée d'un autre acteur générique « Preprocess » a₂ effectuant un prétraitement de la donnée produite par l'acteur d'acquisition a₁ dans toutes les reconfigurations possibles. Dans une première configuration (mode noté par *λ*₁), l'acteur « Fast Process » a₃ (acteur rapide) effectue un traitement rapide et basse définition de la donnée prétraitée par l'acteur de prétraitement a₂. Dans la deuxième reconfiguration (mode noté par *λ*₂), l'acteur « Hi-Quality Proces » a₄ (acteur lent) effectue un traitement lent mais de haute définition. Ainsi, le chemin de traitement des données de la première configuration *λ*₁ est le chemin reliant l'acteur d'acquisition a₁ à l'acteur de prétraitement a₂, à l'acteur de traitement rapide a₃ et puis finalement à l'acteur de commande a₅. La deuxième configuration *λ*₂ est définie par le chemin reliant l'acteur d'acquisition a₁ à l'acteur de prétraitement a₂, à l'acteur de traitement lent a₄ et puis finalement à l'acteur de commande a₅. Ainsi, la configuration se propage d'un acteur à un autre et par conséquent, aucune synchronisation centralisée sur ces modes de reconfigurations n'est nécessaire. Chaque acteur va communiquer à son voisin le mode de configuration dans lequel il doit fonctionner. Le choix de la configuration courante est effectué par l'acteur de mode a₈ qui utilise de préférence le traitement haute définition lorsqu'il est disponible.

Selon cet exemple, l'acteur de traitement rapide a₃ à chaque fois qu'il s'active consomme une donnée sur son canal d'entrée c₃ (représenté sur le canal c₃ par un « 1 ») et produit une donnée sur son canal de sortie c₄ (représenté sur le canal c₄ par un « 1 »). De même pour l'acteur de traitement lent a₄ qui consomme une donnée sur son canal d'entrée c₅ et produit une donnée sur son canal de sortie c₆. L'acteur de commande a₅ à chaque fois qu'il s'active consomme une donnée sur son premier canal d'entrée c₄ ou sur son deuxième canal d'entrée c₄ (selon le mode de configuration) et produit une donnée sur son canal de sortie c₂. L'acteur de prétraitement a₂ à chaque fois qu'il s'active consomme une donnée sur son premier canal d'entrée c₁ et une donnée sur son deuxième canal d'entrée c₉ et produit une donnée sur son premier canal de sortie c₃ ou sur son deuxième canal de sortie c₅ (selon le mode de configuration).

En revanche, l'acteur d'acquisition a₁ consomme un nombre rationnel de données sur son canal d'entrée c₂ (représenté sur le canal d'entrée c₂ par la valeur « 1/3 ») et produit un nombre rationnel de données sur son canal de sortie c₁ (représenté sur le canal de sortie c₁ par la valeur « 1/3 »). Ceci veut dire que l'acteur d'acquisition a₁ consomme ou produit une donnée toutes les trois activations. L'exemple de la Fig. 2 montre qu'à l'état initial, il y a un jeton T1 (i.e. une donnée) disponible sur le canal c₂ (entre l'acteur de commande a₅ et l'acteur d'acquisition a₁). Alors, l'acteur d'acquisition a₁ va consommer cette donnée existante sur ce canal c₂ et va produire une donnée sur son canal de sortie c₁ (i.e. le canal c₁ reliant l'acteur d'acquisition a₁ à l'acteur de prétraitement a₂). Ainsi, l'acteur d'acquisition a₁ a consommée une donnée et a produit une donnée. En revanche, sur ses deux prochaines activations, il va consommer zéro donnée et produire zéro donnée. Autrement dit, l'acteur d'acquisition a₁ consomme une donnée et produit une donnée toutes les trois activations. Ceci permet de synchroniser les données entre deux acteurs fonctionnant selon des fréquences différentes sans aucune perte de données. En effet, selon cet exemple, l'acquisition apparaît trois fois pour chaque commande permettant ainsi le transfert de données entre l'acteur d'acquisition a₁ fonctionnant à 30 Hz et l'acteur de commande a₅ fonctionnant à 10 Hz sans aucune perte de données.

Dans la suite, on résume les éléments définissant le modèle formel 13 en faisant référence à l'exemple de la Fig. 2. Selon ce formalisme, la spécification d'un flot de données se compose des éléments F1-F9 suivants :
F1 : On définit l'ensemble des acteurs génériques a₁-a₅ qui traitent des données, ainsi que l'ensemble des acteurs de mode a₆ et a₇ qui traitent des données et/ou sélectionnent des modes de configurations.
F2 : On définit l'ensemble des canaux c₁-c₁₀ connectant les acteurs entre eux, chaque acteur étant associé à au moins un canal d'entrée ou de sortie.
F3 : On définit le nombre de données produites ou consommées par acteur pour chacun de ses canaux d'entrée ou de sortie, avec avantageusement la possibilité pour un canal d'avoir un seul de ces nombres qui soit un nombre rationnel. Ces nombres sont représentés par les valeurs sur les arcs c₁-c₁₀ connectant les acteurs.
F4 : Pour chaque acteur de mode a₈ d'un ensemble non vide de modes, l'acteur de mode a₈ étant en charge de choisir dynamiquement pour chacune de ses activations un et un seul de ces modes (ces modes sont notés *λ*₁ et *λ*₂). Le choix de la configuration courante est avantageusement fait par un acteur de mode a₈ unique et cette configuration courante se propage de manière distribuée d'un acteur à un autre.
F5 : Pour chaque acteur générique a₁-a₅, on définit l'ensemble des modes dans lesquels il s'exécute, et l'ensemble implicite de tous les autres modes dans lesquels il passe. On notera que l'ensemble des modes dans lesquels un acteur générique s'exécute est soit un mode nominal commun à tout le système, soit un sous-ensemble des modes choisis par des acteurs de mode. Dans l'exemple de la Fig. 2, tous les acteurs à l'exception des acteurs de prétraitement a₂, de traitement rapide a₃ et de traitement lent a₄ s'exécutent dans le mode nominal sachant que l'acteur de prétraitement a₂ s'exécute dans les modes *λ*₁ et *λ*₂, l'acteur de traitement rapide a₃ s'exécute dans le mode *λ*₁, et l'acteur de traitement lent a₄ s'exécute dans le mode *λ*₂.
F6 : Etant donnés les différents modes, on définit un ensemble implicite de canaux de rétroaction comme l'ensemble des canaux connectant deux acteurs génériques s'exécutant chacun dans au moins un des modes choisis par un même acteur de mode, et tels qu'il existe un chemin sans répétition partant de l'acteur de mode et se terminant par l'acteur producteur sur ce canal, en passant par un acteur consommateur.
F7 : On définit des contraintes de fréquence maximale pour certains acteurs génériques ou de mode. Une manière possible de les exprimer est par des acteurs dits d'horloge a₆ auxquels on associe une fréquence. Dans l'exemple de la Fig. 2, l'acteur d'acquisition a₁ a une contrainte de fréquence maximale de 30Hz, exprimée par l'acteur horloge a₆ avec pour fréquence 30Hz, et l'arc c₇ les connectant et les quantités de données associées.
F8 : On définit des contraintes de fréquence minimale pour certains acteurs génériques ou de mode. Une manière possible de les exprimer est par des acteurs dits d'échéance a₇ auxquels on associe une fréquence. Dans l'exemple de la Fig. 2, l'acteur de commande a₂ a une contrainte de fréquence minimale de 10Hz, exprimée par l'acteur échéance a₇ avec pour fréquence 10Hz, l'arc c₈ les connectant et les quantités de données associées. On notera qu'un même acteur peut être contraint de fonctionner à une fréquence minimale et maximale, dans ce cas c'est une contrainte de fréquence exacte. Autrement dit, une contrainte de fréquence est soit maximale (pas plus que tant de fois par seconde), soit minimale (au moins tant de fois par seconde), soit exacte (exactement tant de fois par seconde).
F9 : Un état initial du système composé par canal d'un nombre rationnel et d'une séquence de modes de longueur égale à l'arrondi inférieur de ce nombre rationnel, et par acteur générique de son mode initial. Dans l'exemple de la Fig. 2, tous les acteurs ont pour mode initial le mode nominal, et les canaux marqués par un petit cercle T1 et T2 ont un état initial de valeur « 1 ». Bien entendu, l'état initial peut être exprimé par un nombre rationnel quelconque (par exemple, 2/5 ; 4/3 ;etc.) et ceci découle du fait que les rythmes de production et consommation sont rationnels selon un mode de réalisation avantageux de l'invention.

Le tableau suivant Tab. 1 donne à titre d'exemple des données de configuration requises pour une implémentation du modèle formel 13 de la Fig. 2.

**Tableau 1**

| Acteur | Acquisition | Preprocess | Fast process | Hi-Quality Process | Command |
|---|---|---|---|---|---|
| Budget (ms) | 10 | 30 | 30 | 40 | 20 |
| Délai initial (ms) | 0 | 0 | 0 | 0 | 0 |
| Echéance initiale (ms) | 0 | 0 | 0 | 0 | 110 |
| Echéance entrées (ms) | 5 | 20 | 50 | 50 | 90 |
| Politique entrées par défaut | Ignorer | Précédent | Ignorer | Ignorer | Précédent |
| Persistant/Ephémère | Persistant | Persistant | Persistant | Persistant | Persistant |
| Strict/Relâché | Strict | Strict | Strict | Strict | Strict |

La première ligne représente les cinq acteurs génériques : Acquisition (acteur d'acquisition) a₁, Preprocess (acteur de prétraitement) a₂, Fast Process (acteur de traitement rapide) a₄, Hi-Quality Process (acteur de traitement lent) a₄ et Command (acteur de commande) a₅.

Les deuxième, troisième, quatrième, et cinquième lignes indiquent des valeurs en ms, d'un budget, d'un délai initial, d'une échéance initiale, et d'une échéance d'entrées respectivement. Les sixième, septième, et huitième lignes désignent une politique d'entrées par défaut, un indicateur persistant/éphémère, et un indicateur strict/relâché.

Les valeurs sont en général imposées par l'intégrateur de la plateforme et sont données ici uniquement à titre d'exemple. Le budget désigne la durée en ms allouée à chaque acteur pour faire ses différentes tâches. Le délai initial et l'échéance initiale indiquent les délais de communication et production des échantillons afin de prendre en compte l'acheminement et le traitement des différents échantillons. Un délai initial égal à zéro signifie qu'il n'y a aucune contrainte de latence forcée et l'acteur commence dès qu'il est prêt. L'échéance d'entrées désigne l'échéance d'arrivée pour les données consommées par les implémentations des acteurs et permet ainsi d'allouer une durée d'attente à un acteur afin d'attendre les données qui lui sont destinées avant de commencer à travailler.

La politique d'entrées par défaut désigne dans cet exemple deux types de politiques. Lorsqu'il n'y a pas de données d'entrées, la politique « Ignorer » ne produit pas de données de remplacement, et la politique « Précédent » copie la dernière entrée reçue. On peut également mettre en place une troisième politique « Défaut » qui produit systématiquement une même valeur par défaut.

Une autre donnée de configuration d'entrée peut éventuellement concerner la désignation d'une absence de production comme étant une faute ou non. Dans l'exemple de la Fig. 2, seule l'absence de sortie de l'acteur Command vers l'acteur Acquisition n'est pas considérée comme une faute, la requête de calibration n'étant pas obligatoire.

Par ailleurs, dans la suite de la description, on va s'intéresser plus particulièrement, à un système de supervision formelle de communications dans une architecture orientée-service. Autrement dit, la spécification de communication 15 est une spécification d'une implémentation orientée-service et les fonctions de communications sont des fonctions orientées-services.

A titre d'exemple, on considère que l'architecture orientée-service est composée de trois services : AcquisitionService, PreprocessService, et ProcessService. Chaque service offre les interfaces suivantes :
- AcquisitionService (service d'acquisition) publie une interface AcquisitionService::Samples produisant les échantillons capteurs, et offre une interface AcquisitionService::Calibrate pour traiter des requêtes de calibration ;
- PreprocessService (service de prétraitement) publie une interface produisant les échantillons prétraités, et pour implémenter les reconfigurations, cette interface est dupliquée en interfaces PreprocessService::Samples1 et PreprocessService::Samples2, qui seront utilisées selon les reconfigurations en cours ; et
- ProcessService (service de traitement) publie une interface ProcessService::Samples produisant les échantillons traités.

Les implémentations de chaque service sont identifiées par un unique identifiant. Il y a une implémentation Acq1 de AcquisitionService, une implémentation Pre1 de PreprocessService, et deux implémentations Proc1 et Proc2 de ProcessService. Il y a également une implémentation qui est seulement cliente Com1. Le lien entre ces implémentations et les acteurs du modèle est donné dans le Tableau 2 suivant.

**Tableau 2**

| Implémentation logicielle | Acteur de modèle |
|---|---|
| Acq1 | Acquisition |
| Pre1 | Preprocess |
| Proc1 | Fast Process |
| Proc2 | High-quality Process |
| Com1 | Command |

Les logiciels implémentant les cinq acteurs du modèle peuvent être réalisés par différents fournisseurs de logiciels. Ces logiciels font des appels à des fonctions de communication pour établir les communications orientées-service.

A titre d'exemple, on décrit ci-dessous les fonctions de communication relatives à l'interface de programmation de la plateforme AutoSAR Adaptive pour l'automobile décrit dans les documents [4, 5]. Ces fonctions de communication comportent une fonction d'offre de service (OffrirService), une fonction de publication d'interface (Publierlnterface), une fonction de souscription à une interface publiée (Souscrirelnterface), une fonction d'émission (Emettre), une fonction de réception (Recevoir), une fonction de requête (Requête), et une fonction de traitement sur une interface (Traiter).

La fonction OffrirService (identifiant de service) permet d'identifier le logiciel appelant comme l'implémentation associée à l'identifiant.

La fonction Publierlnterface (identifiant d'interface) permet au logiciel appelant de donner l'accès à l'interface associée à l'identifiant pour les autres logiciels.

La fonction Souscrirelnterface (identifiant de service, identifiant d'interface) permet au logiciel appelant de recevoir les données émises par le logiciel associé à l'identifiant de service à travers l'interface associée à l'identifiant d'interface.

La fonction Emettre (identifiant d'interface, donnée) permet au logiciel appelant d'émettre la donnée fournie à travers l'interface associée à l'identifiant d'interface ; ceci équivaut à la production d'un jeton dans le modèle formel 13 de flot de données.

La fonction Recevoir (identifiant de service, identifiant d'interface) permet au logiciel appelant de consulter les données émises à travers l'interface associée aux identifiants depuis le dernier appel à Recevoir ; ceci équivaut à la consommation d'autant de jetons que de données consultées dans le modèle formel 13 de flot de données.

La fonction Requête (identifiant de service, identifiant d'interface, paramètres) permet au logiciel appelant d'envoyer une requête de traitement associée à l'identifiant d'interface au logiciel associé à l'identifiant de service, pour traitement des paramètres donnés, et de récupérer un éventuel résultat une fois la requête traitée ; ceci équivaut à la production d'un jeton dans le modèle formel 13 de flot de données, et la récupération du résultat équivaut à la consommation d'un jeton.

La fonction Traiter (identifiant d'interface) permet au logiciel appelant de récupérer les paramètres d'une requête reçue sur l'interface identifiée, d'effectuer les traitements requis, et éventuellement d'émettre un résultat au logiciel ayant envoyé la requête ; la récupération de requête équivaut à la consommation d'un jeton dans le modèle formel 13 de flot de données, tandis que l'émission d'un résultat correspond à la production d'un jeton.

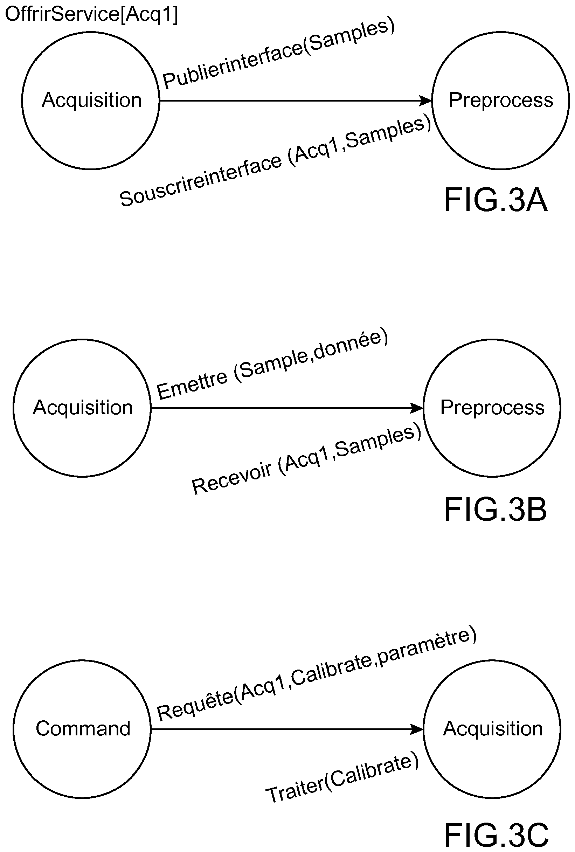

Les Figs. 3A-3C illustrent de manière schématique la correspondance entre des acteurs du modèle formel et la description des interfaces orientées-service de la spécification de communication, selon un mode de réalisation de l'invention.

Plus particulièrement, la Fig. 3A montre la correspondance entre la topologie du graphe du modèle formel 13 et les interfaces orientées-services pour offrir un service, publier une interface, et souscrire à une interface publiée. A titre illustratif, on ne considère dans cet exemple que deux acteurs Acquisition a₁ et Preprocess a₂. Le logiciel Acq1 qui réalise le comportement de l'acteur Acquisition a₁ va publier des interfaces Publierinterface(Smples) correspondant au service d'acquisition. Plus particulièrement, le logiciel Acq1 va appeler la fonction OffrirService et ensuite, il va appeler la fonction Publierlnterface créant ainsi un port de connexion sur lequel les données seront publiées. Ensuite, le logiciel Pre1 implémentant l'acteur Preprocess a₂ va appeler la fonction Souscrirelnterface pour souscrire à l'interface du logiciel Acq1 afin de consommer les échantillons produits. La Fig. 3A fait ainsi le lien entre ces différents éléments et permet de redessiner le graph de flot de données au fur et à mesure que les appels aux fonctions sont faits. On notera que la Fig.3A concerne une première phase dite d'initialisation destinée à vérifier que les communications correspondent bien au graphe du modèle formel 13 de la Fig. 2. Une fois, que le graph est construit, on entre dans une deuxième phase dite de fonctionnement décrite par la Fig. 3B.

En effet, la Fig. 3B montre la correspondance entre la production/consommation sur un canal du graphe du modèle formel 13 et l'émission/réception de données sur une interface orientée-service. Le logiciel Acq1 va appeler régulièrement la fonction Emettre sur son interface et il va fournir une donnée concrète sur cette interface. Le logiciel Pre1 implémentant l'acteur Preprocess va appeler la fonction Recevoir pour consommer cette donnée.

La Fig. 3C montre la correspondance entre la production/consommation sur un canal du graphe du modèle formel 13 et envoi de requête et traitement sur une interface orientée-service. Plus particulièrement, Le logiciel Com1 implémentant l'acteur Command envoie une requête comportant des paramètres et l'identifiant de la requête, ce qui correspond à la production d'un jeton dans le graphe du modèle formel de la Fig.2. De l'autre côté, le logiciel Acq1 de l'acteur Acquisition va appeler la fonction Traiter pour traiter la requête sur son interface.

Le comportement attendu pour les implémentations des acteurs de l'exemple des Fig. 3A-3C est le suivant :
- Acq1 : avec la configuration décrite ci-dessus, l'exemple du modèle formel 13 de la Fig. 2 détermine que l'acteur Acquisition a trois activations successives telles que la première doit avoir lieu entre 0ms et 20ms, doit produire un jeton sur son canal de sortie et consommer un jeton sur son canal d'entrée. Les deux activations suivantes ne communiquent pas. Ainsi, le comportement attendu pour l'implémentation est d'appeler la fonction Emettre sur l'interface AcquisitionService::Samples une fois et d'appeler la fonction Traiter de manière à traiter une requête pour l'interface AcquisitionService::Calibrate, et ce entre 0ms et 20ms. Ce comportement doit se répéter entre 100ms et 120ms, 200ms et 220ms, etc.
- Pre1 : avec la configuration décrite ci-dessus, l'exemple du modèle formel 13 de la Fig. 2 détermine que l'acteur Preprocess a une activation qui doit avoir lieu entre 0ms et 50ms, doit consommer un jeton sur son canal d'entrée et produire un jeton contenant des données sur un des canaux de sortie, et un jeton ne contenant pas de données sur l'autre canal. Pour prendre en compte les reconfigurations possibles, cette implémentation vérifie si l'implémentation Proc2 a appelé la fonction OffrirService. Ainsi, le comportement attendu pour l'implémentation est d'appeler la fonction Recevoir sur l'interface Samples de Acq1 de manière à consulter une donnée, et d'appeler une fois la fonction Emettre soit sur son interface Samples1 soit sur son interface Samples2, et ce entre 0 et 50ms. Ce comportement doit se répéter entre 100ms et 150ms, 200ms et 250ms, etc.
- Proc1 : avec la configuration décrite ci-dessus, l'exemple du modèle formel 13 de la Fig. 2 détermine que l'acteur Fast Process a une activation qui doit consommer un jeton sur son canal d'entrée et produire un jeton sur son canal de sortie, ce jeton contenant soit des données soit aucune donnée. Ainsi, le comportement attendu pour cette implémentation est d'appeler la fonction Recevoir sur l'interface Samples1 de Pre1 de manière à consulter une ou zéro donnée, et d'appeler la fonction Emettre sur son interface Samples une fois, et ce uniquement si une donnée a été effectivement reçue, et ce entre 0 et 90ms. Ce comportement doit se répéter entre 100ms et 190ms, 200ms et 290ms, etc.
- Proc2 : le comporement attendu est le même que celui de Proc1 excepté que l'interface pour Recevoir est l'interface Samples2 de Pre1.
- Com1 : avec la configuration décrite ci-dessus, l'exemple du modèle formel 13 de la Fig. 2 détermine que l'acteur Command a une activation qui doit consommer un jeton contenant des données sur un de ses canaux d'entrée, et un jeton ne contenant aucune donnée sur l'autre, de produire un jeton sur son canal de sortie. Ainsi, le comportement attendu pour cette implémentation est d'appeler la fonction Recevoir sur l'interface Samples de Proc1 et Proc2, de manière à consulter une donnée sur l'une ou l'autre, et optionnellement d'appeler la fonction Requête sur l'interface Calibrate une fois, et ce entre 0ms et 110ms. Ce comportement doit se répéter entre 100ms et 210ms, 200ms et 310ms, etc.

Une fois que la description d'un acteur est définie, le module de supervision 11 prend en entrée cette description et vérifie qu'une séquence d'appel aux fonctions de communication orientées-services est conforme au comportement attendu de l'acteur.

On notera que le module de supervision 11 peut être implémenté selon différentes techniques en utilisant par exemple, des automates, des arbres, des listes, des choix de codes avec des conditions imbriquées, des expressions régulières avec une grammaire, etc.

Toutefois, dans la suite de la description on considère à titre d'exemple, une technique de génération de codes basée sur des automates. Ainsi, le module de supervision 11 construit un automate décrivant le comportement attendu pour l'implémentation, dans lequel les transitions correspondent à un appel d'une des fonctions de communication décrites précédemment.

Plus particulièrement, le module de supervision 11 est configuré pour construire un automate pour chaque implémentation logicielle correspondant à un acteur, chaque automate comportant un ensemble d'états dont la transition d'un état à un autre est déclenchée par un appel de l'implémentation logicielle d'une fonction parmi les fonctions de communication. L'automate se base sur le comportement attendu par le modèle formel pour tracer les séquences d'appel valides aux fonctions de communication de l'implémentation logicielle.

Un exemple de construction d'un tel automate serait celle d'un automate divisé en deux parties, une correspondant à *l'initialisation* de l'implémentation logicielle, l'autre à son *fonctionnement* une fois initialisé, connectés par une transition autorisée seulement après le démarrage synchronisé de la plateforme.

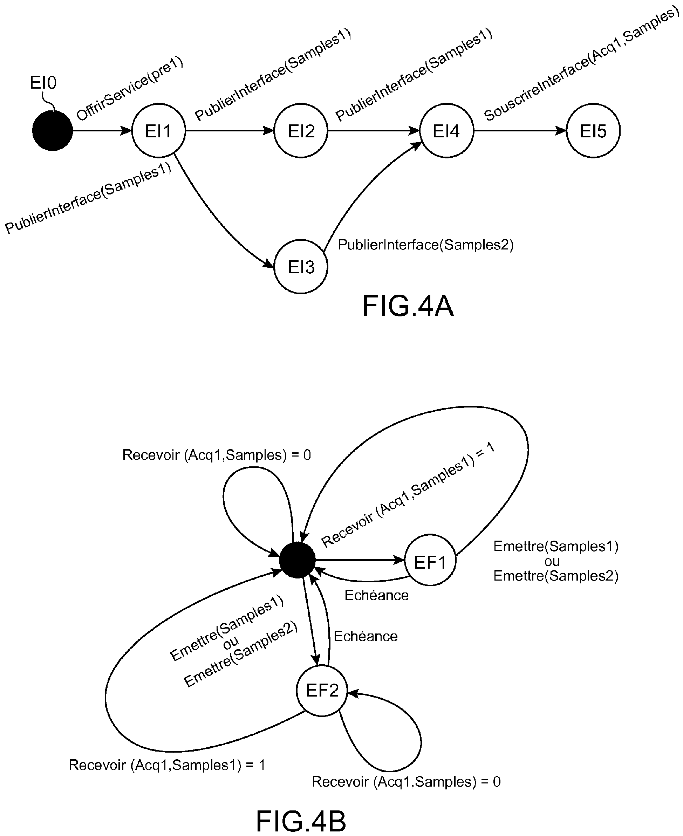

En effet, les Figs. 4A et 4B illustrent de manière schématique la construction des première et seconde parties d'un automate, selon un mode de réalisation de l'invention.

Plus particulièrement, la Fig. 4A montre la construction de la première partie de l'automate. Cette construction part d'un état initial et arrive à un état final en passant par un certain nombre d'états intermédiaires et des transitions déclenchées lorsque :
- l'implémentation appelle la fonction OffrirService avec un identifiant de service associé à cette implémentation ;
- l'implémentation appelle la fonction Publierlnterface avec un identifiant d'interface correspondant à l'interface d'un service pour lequel un appel à OffrirService a amené à l'état courant ;
- l'implémentation appelle la fonction Souscrirelnterface avec un identifiant d'interface et de service correspondant à une connexion attendue au logiciel associé à cet identifiant de service.

Plus particulièrement, l'exemple de la Fig. 4A représente l'automate d'initialisation généré pour l'implémentation Pre 1 de l'acteur Preprocess a₂ de l'exemple de la Fig. 2. Dans la phase d'initialisation, l'implémentation est dans un état initial EI0 (référence par un cercle noir). L'automate peut appeler n'importe quelle fonction mais tant qu'il n'a pas appelé la fonction OffrirService, on ne le reconnaît pas comme étant l'implémentation Pre 1 de l'acteur Preprocess. Une fois qu'il est identifié comme étant l'implémentation Pre 1 de l'acteur Preprocess, il peut publier à l'état EI1 soit l'interface Samples1 soit l'interface Samples2. S'il a commencé par publier l'interface Samples1, il publie ensuite l'interface Samples2 (état EI2). En revanche, s'il a commencé par publier l'interface Samples2, il publie ensuite l'interface Samples1 (état EI3). Une fois qu'il a publié ces interfaces, il peut alors souscrire à l'interface Acq1 (état EI4) et finalement, on considère à l'état EI5 qu'il a terminé.

Dans ce cas, une transition de l'état final de la première partie de l'automate vers l'état initial de la seconde partie est possible lorsqu'un signal de synchronisation est reçu par l'implémentation, indiquant l'exécution d'une application concrète sur la plateforme (i.e. indiquant un démarrage du système).

Par ailleurs, selon l'exemple de la Fig. 4B, la construction de la deuxième partie de l'automate part d'un état initial de la seconde partie, et retourne à cet état en passant par un certain nombre d'états intermédiaires et des transitions déclenchées lorsque :
- l'implémentation appelle la fonction Emettre avec un identifiant d'interface précédemment publiée, et la quantité de données déjà émise n'excède pas celle attendue pour cette interface ;
- l'implémentation appelle la fonction Recevoir avec un identifiant d'interface précédemment souscrite, et la quantité de données déjà reçue n'excède pas celle attendue pour cette interface ;
- l'implémentation appelle la fonction Requête avec un identifiant de service et d'interface correspondant à un canal de sortie dans le modèle, et le nombre de requêtes déjà envoyées n'excède pas celui attendu pour cette interface ;
- l'implémentation appelle la fonction Traiter avec un identifiant d'interface correspondant à un canal d'entrée dans le modèle, et le nombre de requêtes déjà traitées n'excède pas celui attendu pour cette interface ;
- l'échéance de l'activation en cours est dépassée.

Plus particulièrement, l'exemple de la Fig. 4B représente l'automate de fonctionnement généré pour l'implémentation Pre 1 de l'acteur Preprocess.

A l'état de fonctionnement initial EF0 (représenté par un cercle noir), l'automate peut appeler la fonction Recevoir et tant qu'il ne reçoit pas un échantillon, il retourne à l'état initial EF0.

Une fois qu'il appele la fonction Recevoir et reçoit un échantillon, l'automate va transiter vers l'état EF1. A l'état EF1, l'automate va soit émettre un échantillon sur l'interface Samples1 soit émettre un échantillon sur l'interface Samples2 avant de retourner à son état initial EF0. Toutefois, si à l'état EF1, on détecte une violation d'échéance, alors l'automate retourne directement à son état initial EF0.

Par ailleurs, si au lieu de commencer par Recevoir, l'automate commence par appeler la fonction Emettre, l'automate va transiter vers l'état EF2. A l'état EF2, l'automate va soit émettre un échantillon sur l'interface Samples1, soit émettre un échantillon sur l'interface Samples2 avant de retourner à son état initial EF0. En outre, tant qu'il ne reçoit pas un échantillon, il retourne à l'état EF2. De même que précédemment, si à l'état EF2, on détecte une violation d'échéance, alors l'automate retourne directement à son état initial EF0.

Ainsi, l'automate de fonctionnement créé pour l'implémentation Pre 1 décrit les séquences de fonctions de communication valides correspondant au comportement de son acteur Preprocess.

Une fois cet automate construit, le module de supervision génère des éléments logiciels configurés pour capturer les appels de fonctions de communication et pour s'assurer que la séquence des appels effectués à l'exécution d'une application concrète correspond à la séquence définie par l'automate.

Les éléments logiciels comportent les éléments logiciels suivants :
- Une fonction étendue pour chacune des fonctions de communication décrites précédemment. A chaque appel par un logiciel, chaque fonction étendue interroge l'automate pour déterminer si une transition sortante de l'état courant correspond à cet appel. S'il y a une telle transition, la fonction étendue effectue l'appel à la fonction d'origine. Sinon, la fonction étendue enregistre une faute si nécessaire, et retourne immédiatement après la gestion de faute si celle-ci le permet. Un cas particulier concerne la fonction Recevoir, pour laquelle le nombre de données consultées n'est pas connu à l'avance. La version étendue de cette fonction s'assure qu'au plus, le nombre de données spécifié est consultable par l'application, toute donnée supplémentaire est mise en mémoire tampon en attendant la prochaine activation où elles seront rendues consultables. Ainsi, plusieurs appels à Recevoir sont possibles pour une même activation, mais le nombre de données consultées n'excède jamais celui spécifié.
- Une fonction pour la gestion d'échéance des données d'entrée. A chaque passage par l'état initial, la date d'échéance de réception des données d'entrée pour l'activation suivante est calculée et la fonction est programmée pour être appelée à cette date. Si la fonction est appelée de cette manière, elle enregistre une faute si nécessaire et implémente la politique de gestion de défaut. Par exemple, dans de cas de l'implémentation Pre1, la valeur du dernier échantillon reçu est mise à disposition comme si il avait été reçu.
- Une fonction pour la gestion d'échéance de l'activation en cours. A chaque passage par l'état initial, la date d'échéance pour l'activation suivante est calculée et la fonction est programmée pour être appelée à cette date. Si la fonction est appelée de cette manière, elle met à jour l'état courant de l'automate pour démarrer une nouvelle activation et retourne immédiatement après la gestion de faute si celle-ci le permet.

Le module de supervision est configuré pour générer également un logiciel en charge d'autoriser la transition de passage entre la phase d'initialisation et la phase de fonctionnement de toutes les implémentations de la plateforme. Tant que le module de supervision n'autorise pas le démarrage synchronisé, les logiciels d'implémentations d'acteurs ne peuvent pas entrer en phase de fonctionnement. Ce code peut par exemple attendre qu'un sous-ensemble de logiciels soit prêt à passer en fonctionnement, ou gérer une échéance temporelle. Ce code s'appuie sur des technologies existantes pour la synchronisation temporelle entre les logiciels, généralement disponibles sur les plateformes logicielles orientées-service.

Ainsi, la présente invention permet, à partir d'une interface de programmation standard qui fait des appels à des fonctions standards, de s'assurer que les appels sont faits dans le bon ordre et conformément au comportement attendu sans modifier les logiciels de l'interface de programmation. Ceci permet à un intégrateur d'être fourni par des fournisseurs de logiciels standards tout en utilisant sa propre méthodologie.

La présente invention s'applique à tous les systèmes à flot de données. Une première application concerne les systèmes distribués temps-réel critiques. En particulier, un système embarqué temps-réel d'un équipement, configuré pour recevoir des mesures spécifiques de l'équipement et son environnement et pour délivrer des résultats actionnant des opérations pour le bon fonctionnement de cet équipement. L'équipement peut être un véhicule autonome ou non autonome de type terrestre, ferroviaire, aérospatial ou naval.

En particulier, dans le cadre d'un système de flot de données d'un véhicule, on peut avantageusement avoir selon la présente invention, des capteurs et processeurs fonctionnant selon des fréquences différentes et selon plusieurs configurations. En outre, on peut considérer à titre d'exemple que pour une voiture avec conducteur, la détection de piétons est intéressante à partir d'une certaine vitesse. Ainsi, on peut utiliser différents modes de reconfigurations de sorte que le traitement de détection de piéton se déroule à partir d'une certaine vitesse ou sur une certaine plage de vitesses permettant au microprocesseur de ne pas consommer des ressources d'exécution inutilement en dehors de cette plage.

Une deuxième application concerne les systèmes FPGA pour le temps-réel critique : un système FPGA est un flot de données cadencé par des horloges qui déclenchent les unités de traitement, et dans lesquels le routage des données peut changer dynamiquement.

Une troisième application concerne un système d'un processus industriel configuré pour la fabrication industrielle des objets selon des contraintes de débit particulières et selon un processus reconfigurable. En effet, un procédé de fabrication industriel peut être vu comme un flot de données, avec des contraintes de débit pour des raisons techniques.

### REFERENCES BIBLIOGRAPHIQUES

1. X. K. Do, S. Louise and A. Cohen, Transaction Parameterized Dataflow: A model for context-dependent streaming applications, 2016 Design, Automation & Test in Europe Conference & Exhibition (DATE), Dresden, 2016, pp. 960-965.
2. Haitao Wei, Stéphane Zuckerman, Xiaoming Li, Guang R. Gao, A Dataflow Programming Language and its Compiler for Streaming Systems, Procedia Computer Science, Volume 29, 2014, Pages 1289-1298, ISSN 1877-0509.
3. Gustav Cedersjö and Jörn W. Janneck. Software code génération for dynamic dataflow programs. In Proceedings of the 17th International Workshop on Software and Compilers for Embedded Systems (SCOPES '14). ACM, New York, NY, USA, 2014, 31-39.
4. Explanation of ara::com API, AUTOSAR AP Release 17-03.
5. Spécification of Time Synchronization for Adaptive Platform, AutoSAR AP Release 17-10

## Revendications

1. Système de supervision formelle de communications d'un ensemble d'applications concrètes d'une plateforme, **caractérisé en ce qu'**il comporte :
- un module d'acquisition (9) configuré pour acquérir un modèle formel d'un flot de données comportant un ensemble d'acteurs s'échangeant entre eux des informations quantifiables à travers des canaux de communication unidirectionnels, ledit modèle formel décrivant le comportement dudit ensemble d'acteurs modélisant ledit ensemble d'applications concrètes, et une spécification de communication décrivant des implémentations logicielles implémentant les applications modélisées par lesdits acteurs, lesdites implémentations logicielles étant configurées pour faire des appels à des fonctions de communication prédéterminées relatives à l'interface de programmation de ladite plateforme, et
- un module de supervision (11) configuré pour vérifier qu'une séquence d'appel auxdites fonctions de communication est conforme au comportement attendu dudit ensemble d'acteurs.

2. Système selon la revendication 1, **caractérisé en ce que** le module de supervision (11) est configuré pour construire un automate pour chaque implémentation logicielle correspondant à un acteur, chaque automate comportant un ensemble d'états dont la transition d'un état à un autre est déclenchée par un appel de l'implémentation logicielle d'une fonction parmi lesdites fonctions de communication, ledit automate se basant sur le comportement attendu par le modèle formel pour tracer les séquences d'appel valides auxdites fonctions de communication.

3. Système selon la revendication 2, **caractérisé en ce que** chaque automate comporte une première partie associée à l'initialisation de l'implémentation logicielle et une seconde partie associée au fonctionnement de l'implémentation logicielle, la transition d'un état final de ladite première partie à un état initial de ladite seconde partie étant déclenchée lorsqu'un signal de synchronisation est reçu par l'implémentation logicielle, indiquant l'exécution d'une application concrète.

4. Système selon la revendication 2 ou 3, **caractérisé en ce que** le module de supervision (11) est configuré pour générer des éléments logiciels configurés pour capturer les appels de fonctions de communication et pour s'assurer que la séquence des appels effectués à l'exécution d'une application concrète correspond à la séquence définie par l'automate.

5. Système selon la revendication 4, **caractérisé en ce que** les éléments logiciels comportent une fonction étendue pour chacune des fonctions de communication, une fonction de gestion d'échéance de données d'entrée, et une fonction de gestion d'une activation courante.

6. Système selon l'une quelconque des revendications précédentes, **caractérisé en ce que** la spécification de communication est une spécification d'une implémentation orientée-service.

7. Système selon l'une quelconque des revendications précédentes, **caractérisé en ce que** les fonctions de communication sont orientées-service et comportent une fonction d'offre de service, une fonction de publication d'interface, une fonction de souscription à une interface publiée, une fonction d'émission, une fonction de réception, une fonction de requête, et une fonction de traitement sur une interface.

8. Système selon l'une quelconque des revendications précédentes, **caractérisé en ce que** le modèle formel comporte un ensemble de données de configuration requises pour l'implémentation desdits acteurs.

9. Système selon la revendication 8, **caractérisé en ce que** les données de configuration comportent pour chacun des acteurs : des données de budget, de délai initial, d'échéance initiale, d'échéance d'entrées, de politique d'entrées par défaut, d'indicateur persistant/éphémère, et d'indicateur strict/relâché.

10. Système selon l'une quelconque des revendications précédentes, **caractérisé en ce que** la spécification de communication comporte des liens entre les implémentations logicielles et les acteurs du modèle formel.

11. Equipement embarqué temps-réel, conçu en utilisant le système de supervision selon l'une quelconque des revendications précédentes, **caractérisé en ce que** ledit équipement embarqué est configuré pour recevoir des mesures spécifiques à son environnement et pour délivrer des résultats actionnant des opérations de fonctionnement.

12. Equipement selon la revendication 11, **caractérisé en ce que** ledit équipement est un véhicule autonome ou non autonome de type terrestre, ferroviaire, aérospatial ou naval.

13. Procédé de supervision formelle de communications d'un ensemble d'applications concrètes, **caractérisé en ce qu'**il comporte les étapes suivantes :
- acquérir un modèle formel d'un flot de données comportant un ensemble d'acteurs s'échangeant entre eux des informations quantifiables à travers des canaux de communication unidirectionnels, ledit modèle formel décrivant le comportement d'un ensemble d'acteurs modélisant ledit ensemble d'applications concrètes, et une spécification de communication décrivant des implémentations logicielles implémentant les applications modélisées par lesdits acteurs, lesdites implémentations logicielles étant configurées pour faire des appels à des fonctions de communication prédéterminées relatives à l'interface de programmation de ladite plateforme, et
- vérifier qu'une séquence d'appel auxdites fonctions de communication est conforme au comportement attendu dudit ensemble d'acteurs.

## Patentansprüche

1. Formales Kommunikationsüberwachungssystem für eine Reihe von konkreten Anwendungen einer Plattform, **dadurch gekennzeichnet, dass** es Folgendes umfasst:
- ein Erfassungsmodul (9), das konfiguriert ist, um ein formales Modell eines Datenstroms zu erfassen, das einen Satz von Akteuren umfasst, die untereinander quantifizierbare Informationen über unidirektionale Kommunikationskanäle austauschen, wobei das formale Modell das Verhalten des Satzes von Akteuren beschreibt, die den Satz konkreter Anwendungen modellieren, und eine Kommunikationsspezifikation Softwareimplementierungen beschreibt, die die von den Akteuren modellierten Anwendungen implementieren, wobei die Softwareimplementierungen konfiguriert sind, um vorbestimmte Kommunikationsfunktionen in Bezug auf die Programmierschnittstelle der Plattform aufzurufen, und
- ein Überwachungsmodul (11), das konfiguriert ist, zu überprüfen, ob eine Abfolge von Aufrufen der Kommunikationsfunktionen dem erwarteten Verhalten des Satzes von Akteuren entspricht.

2. System nach Anspruch 1, **dadurch gekennzeichnet, dass** das Überwachungsmodul (11) konfiguriert ist, um für jede Softwareimplementierung, die einem Akteur entspricht, einen Automat aufzubauen, wobei jeder Automat einen Satz von Zuständen umfasst, deren Übergang von einem Zustand in einen anderen durch einen Aufruf einer Funktion unter den Kommunikationsfunktionen von der Softwareimplementierung ausgelöst wird, wobei der Automat auf dem vom formalen Modell erwarteten Verhalten basiert, um die gültigen Aufrufsequenzen auf die Kommunikationsfunktionen zurückzuführen.

3. System nach Anspruch 2, **dadurch gekennzeichnet, dass** jeder Automat einen ersten Teil, der der Initialisierung der Softwareimplementierung zugeordnet ist, und einen zweiten Teil aufweist, der dem Betrieb der Softwareimplementierung zugeordnet ist, wobei der Übergang von einem Endzustand des ersten Teils zu einem Anfangszustand des zweiten Teils ausgelöst wird, wenn ein Synchronisationssignal von der Softwareimplementierung empfangen wird, was die Ausführung einer konkreten Anwendung angibt.

4. System nach Anspruch 2 oder 3, **dadurch gekennzeichnet, dass** das Überwachungsmodul (11) konfiguriert ist, um Softwareelemente zu generieren, die konfiguriert sind, um die Aufrufe der Kommunikationsfunktionen aufzuzeichnen und sicherzustellen, dass die Reihenfolge der getätigten Anrufe beim Ausführen einer konkreten Anwendung der vom Automaten vordefinierten Sequenz entspricht.

5. System nach Anspruch 4, **dadurch gekennzeichnet, dass** die Softwareelemente eine erweiterte Funktion für jede der Kommunikationsfunktionen, eine Funktion zur Verwaltung des Fälligkeitsdatums von Eingabedaten und eine Funktion zur Verwaltung einer aktuellen Aktivierung umfassen.

6. System nach einem der vorhergehenden Ansprüche, **dadurch gekennzeichnet, dass** die Kommunikationsspezifikation eine Spezifikation einer dienstorientierten Implementierung ist.

7. System nach einem der vorhergehenden Ansprüche, **dadurch gekennzeichnet, dass** die Kommunikationsfunktionen dienstorientiert sind und eine Dienstangebotsfunktion, eine Schnittstellenveröffentlichungsfunktion, eine Abonnementfunktion für eine veröffentlichte Schnittstelle, eine Sendefunktion, eine Empfangsfunktion, eine Anforderungsfunktion und eine Verarbeitungsfunktion auf einer Schnittstelle aufweisen.

8. System nach einem der vorhergehenden Ansprüche, **dadurch gekennzeichnet, dass** das formale Modell einen Satz von Konfigurationsdaten umfasst, die für die Implementierung der Akteure erforderlich sind.

9. System nach Anspruch 8, **dadurch gekennzeichnet, dass** die Konfigurationsdaten für jeden der Akteure Folgendes umfassen: Budgetdaten, Anfangsfrist, anfängliches Fälligkeitsdatum, Fälligkeitsdatum für Eingaben, Standard-Eintrittsrichtlinie, Indikator für dauerhaft/flüchtig und Indikator für strikt/frei.

10. System nach einem der vorhergehenden Ansprüche, **dadurch gekennzeichnet, dass** die Kommunikationsspezifikation Verknüpfungen zwischen den Softwareimplementierungen und den Akteuren des formalen Modells umfasst.

11. Echtzeit-Bordeinrichtung, die unter Verwendung des Überwachungssystems nach einem der vorhergehenden Ansprüche konzipiert wurde, **dadurch gekennzeichnet, dass** die Bordeinrichtung konfiguriert ist, um für seine Umgebung spezifische Messungen zu empfangen und Ergebnisse zu liefern, die den Funktionsbetrieb aktivieren.

12. Einrichtung nach Anspruch 11, **dadurch gekennzeichnet, dass** es sich bei der Einrichtung um ein autonomes oder nichtautonomes Fahrzeug vom Land-, Schienen-, Luft- und Raumfahrt- oder Schiffsfahrzeugtyp handelt.

13. Verfahren zum formellen Überwachen der Kommunikation eines Satzes von konkreten Anwendungen, **dadurch gekennzeichnet, dass** es die folgenden Schritte umfasst:
- Erfassen eines formalen Modells eines Datenstroms, der aus einer Gruppe von Akteuren besteht, das einen Satz von Akteuren umfasst, die untereinander quantifizierbare Informationen über unidirektionale Kommunikationskanäle austauschen, wobei das formale Modell das Verhalten des Satzes von Akteuren beschreibt, die den Satz konkreter Anwendungen modellieren, und eine Kommunikationsspezifikation Softwareimplementierungen beschreibt, die die von den Akteuren modellierten Anwendungen implementieren, wobei die Softwareimplementierungen konfiguriert sind, um vorbestimmte Kommunikationsfunktionen in Bezug auf die Programmierschnittstelle der Plattform aufzurufen, und
- Überprüfen, ob eine Abfolge von Aufrufen der Kommunikationsfunktionen dem erwarteten Verhalten des Satzes von Akteuren entspricht.

## Claims

1. A system for formally supervising communications of a set of concrete applications of a platform, **characterised in that** it includes:
- an acquisition module (9) configured to acquire a formal model of a data stream including a set of actors exchanging quantifiable information with each other through unidirectional communication channels, said formal model describing the behaviour of said set of actors modelling said set of concrete applications, and a communication specification describing software implementations implementing the applications modelled by said actors, said software implementations being configured to make calls to predetermined communication functions relating to the programming interface of said platform, and
- a supervision module (11) configured to verify that a sequence of calls to said communication functions is in accordance with the expected behaviour of said set of actors.

2. The system according to claim 1, **characterised in that** the supervision module (11) is configured to build an automaton for each software implementation corresponding to an actor, each automaton including a set of states wherein the transition from one state to another is triggered by a call from the software implementation to one amongst said communication functions, said automaton being based on the behaviour expected by the formal model to trace the valid call sequences to said communication functions.

3. The system according to claim 2, **characterised in that** each automaton includes a first portion associated with the initialisation of the software implementation and a second portion associated with the operation of the software implementation, the transition from a final state of said first portion to an initial state of said second portion being triggered when a synchronisation signal is received by the software implementation, indicating the execution of a concrete application.

4. The system according to claim 2 or 3, **characterised in that** the supervision module (11) is configured to generate software elements configured to capture calls to communication functions and to ensure that the sequence of calls performed upon execution of a concrete application corresponds to the sequence defined by the automaton.

5. The system according to claim 4, **characterised in that** the software elements include an extended function for each of the communication functions, an input data deadline management function, and a current activation management function.

6. The system according to any one of the preceding claims, **characterised in that** the communication specification is a specification of a service-oriented implementation.

7. The system according to any one of the preceding claims, **characterised in that** the communication functions are service-oriented and include a service provision function, an interface publication function, a published interface subscription function, an emission function, a reception function, a request function, and a processing function on an interface.

8. The system according to any one of the preceding claims, **characterised in that** the formal model include a set of configuration data required for the implementation of said actors.

9. The system according to claim 8, **characterised in that** the configuration data include for each of the actors: budget, initial time period, initial deadline, input deadline, default input policy, persistent/ephemeral indicator, and strict/relaxed indicator data.

10. The system according to any one of the preceding claims, **characterised in that** the communication specification includes links between the software implementations and the actors of the formal model.

11. A real-time embedded piece of equipment, designed using the supervision system according to any one of the preceding claims, **characterised in that** said embedded equipment is configured to receive measurements specific to its environment and to deliver results actuating functional operations.

12. The piece of equipment according to claim 11, **characterised in that** said equipment is an autonomous or non-autonomous land, rail, aerospace or naval type vehicle.

13. A method for formal supervision of communications of a set of concrete applications, **characterised in that** it includes the following steps:
- acquiring a formal model of a data stream including a set of actors exchanging quantifiable information with each other through unidirectional communication channels, said formal model describing the behaviour of a set of actors modelling said set of concrete applications, and a communication specification describing software implementations implementing the applications modelled by said actors, said software implementations being configured to make calls to predetermined communication functions relating to the programming interface of said platform, and
- verifying that a sequence of calls to said communication functions is in accordance with the expected behaviour of said set of actors.
